# EUROPÄISCHE PATENTSCHRIFT

(11) **EP 0 909 628 B1**
(45) Veröffentlichungstag und Bekanntmachung des Hinweises auf die Patenterteilung: **26.10.2005**
(21) Anmeldenummer: 98810813.0
(22) Anmeldetag: 20.08.1998
(51) Int. Cl.: B29C 45/77, B29C 45/78, B29C 33/00

(54) **Verfahren zur Regelung der Heisskanalheizung eines Mehrkavitäten-Spritzgiesswerkzeugs**
Method and apparatus to regulate heating of a hot runner in a multicavity mould
Méthode et dispositif pour le réglage du chauffage du canal d'injection d'un moule à cavités multiples

(30) Priorität: 16.09.1997 CH 218097
(43) Veröffentlichungstag der Anmeldung: 21.04.1999
(73) Patentinhaber: Kistler Holding AG, 8408 Winterthur (CH)
(72) Erfinder: Bader, Christopherus, 8413 Neftenbach (CH); Zanetti, Markus, 8500 Frauenfeld (CH)

(56) Entgegenhaltungen:
- EP-A- 0 539 109
- US-A- 3 642 404
- US-A- 5 419 858
- PATENT ABSTRACTS OF JAPAN vol. 007, no. 261 (M-257), 19. November 1983 (1983-11-19) & JP 58 142833 A (KOBE SEIKOSHO KK), 25. August 1983 (1983-08-25)
- PATENT ABSTRACTS OF JAPAN vol. 007, no. 137 (M-222), 15. Juni 1983 (1983-06-15) & JP 58 051126 A (TOSHIBA KIKAI KK), 25. März 1983 (1983-03-25)

## Beschreibung

Die Erfindung betrifft ein Verfahren gemäss Oberbegriff von Anspruch 1. Ein solches Verfahren ist bekannt aus dem Artikel "Computerized Mold Diagnostics and closed Loop Molds" in der Zeitschrift "Injection Moulding", März 1997, Seiten 87/88. Dort wird beschrieben, dass zur Einhaltung eines gewünschten Druckbereichs in den einzelnen Kavitäten die Temperaturen in den individuellen Heisskanälen in Abhängigkeit von den gemessenen Werkzeuginnendrücken in den einzelnen Kavitäten eingestellt werden.

Für die Qualität von Kunststoff-Spritzgussteilen ist es bekanntlich unter anderem wesentlich, dass das Erreichen des Umschaltpunkts am Ende der Füllphase möglichst genau zu dem Zeitpunkt erkannt wird, zu dem die Werkzeugkavität gerade volumetrisch gefüllt ist. Bei Mehrkavitäten-Werkzeugen lässt sich eine gute und gleichmässige Qualität daher nur erreichen, wenn alle Kavitäten zum gleichen Zeitpunkt gerade volumetrisch gefüllt sind. Aufgabe der Erfindung ist es, eine gleichmässige Füllung in allen Kavitäten eines Mehrkavitäten-Werkzeugs zu erreichen. Gelöst wird diese Aufgabe mit Hilfe der Merkmale im Kennzeichen von Anspruch 1. Voraussetzung für die Anwendung des erfindungsgemässen Verfahrens ist allerdings, dass alle Kavitäten eines Werkzeugs in Form und Grösse gleich sind.

Die Messung der Zeiten für das Erreichen eines beliebigen Referenzdrucks, der nur über dem Druck am Ende des Füllvorgangs und unterhalb des niedrigsten Maximaldrucks in einer Kavität liegen muss, vermittelt genaue und zuverlässige Kenntnisse über den Zeitpunkt, wann in den einzelenen Kavitäten die volumetrische Füllung errreicht worden ist. Darüber hinaus zeigt sie an, welche Kavitäten bei der Füllung "vorauseilen" und welche dabei "hinterherhinken". Derart detaillierte Aussagen können mit einer Druckbereichsregelung wie im erwähnten Stand der Technik nicht gewonnen werden, da beispielsweise bei einer Maximaldruckregelung unter Umständen Drücke in Kavitäten gemessen werden, in denen die Schmelze bereits erstarrt ist; dies hat sich in Versuchen gezeigt.

Verschiedene Verfahren sind bekannt, um die gleichmässige.Füllung in die verschiedenen Kavitäten zu optimieren.

Die EP 0 539 109 A1 erzielt eine gleichmässige Füllung durch Steuerung der Viskosität des Füllmaterials durch ein dafür speziell konfiguriertes Einlasssystem. Eine Regelung enthält dieses System nicht.

In der JP A 58 142 833 wird ein Verfahren beschrieben, bei welchem eine gleichmässige Füllung aller Kavitäten über die Öffnung jeder einzelnen Düse erreicht wird, gesteuert auf Grund des in jeder Kavität gemessenen Druckes.

Die JP 5805 1126 beschreibt Detektoren, welche an den Enden aller Kavitäten angebracht sind und den Füllstand messen, wodurch die an den Einlassdüsen angebrachten Heizelemente derart gesteuert werden, dass die Füllung aller Kavitäten optimiert wird.

In der US 5 419 858 wird das Einlassdrucksignal gemessen und auf Abweichungen in der Einlasszeit und im Maximaleinlassdruck überprüft. Werden Abweichungen festgestellt, so wird die Temperatur des Füllmaterials entsprechend angepasst um die Fliessfähigkeit Füllmaterials entsprechend zu regeln.

Diese letztgenannten drei alternativen Verfahren zum erfindungsgemässen Verfahren regeln die Flussmenge auf Grund von Druck- oder Füllstandsmessungen, wobei die Temperatur oder die Düsenöffnung variiert wird.

Eine sehr einfache, jedoch relativ zeitaufwendige Regelung der Formfüllung lässt sich mit dem neuen Verfahren durchführen, wenn schrittweise jeweils die Heisskanaltemperatur der zuerst gefüllten, d.h. der in ihrem Druckverlauf vorlaufenden, Kavitäten erniedrigt und/oder diejenige der zuletzt gefüllten, d.h. der nachlaufenden, Kavität erhöht wird.

Um Fehler bei der Regelung der Füllungen in den einzelnen Kavitäten - beispielsweise infolge von Druckschwankungen oder sonstigen Störungen - möglichst auszuschliessen, können bei der Regelung der individuellen Heisskanaltemperaturen in einem vorgegebenen, für alle Kavitäten gleichen Zeitbereich für jede Kavität gebildete Druck/Zeitintegrale berücksichtigt werden. Der Zeitbereich muss spätestens im Umschaltzeitpunkt der zuerst gefüllten Kavität beginnen und zwischen dem Umschaltzeitpunkt und dem Zeitpunkt des Erreichens des Maximaldrucks der zuletzt gefüllten Kavität enden. Die ermittelten Druck/Zeitintegrale können dabei in ähnlicher Weise in einer schrittweisen Näherung verwendet werden, wie vorstehend für die Zeitmessungen beschrieben.

Eine weitere zusätzliche Optimierung des Verfahrens ist möglich, wenn darüber hinaus die maximalen Werkzeuginnendrücke in jeder Kavität erfasst und bei der Heisskanaltemperatur-Regelung berücksichtigt werden.

Wie erwähnt, sind die angedeuteten, iterativen Näherungen an eine gleichzeitige Füllung aller Kavitäten relativ langwierig und erfordern unter Umständen eine grössere Anzahl von Näherungsschritten. Schneller lässt sich eine gleichzeitige Füllung aller Kavitäten erzielen, wenn aus den erhaltenen Zeit-, Integral- und/oder Maximaldruckwerten aller Kavitäten jeweils ein fiktiver Mittelwert und die Differenzen der erhaltenen Werte zu dem fiktiven Mittelwert gebildet werden, wobei die Regelung der individuellen Heisskanaltemperaturen so erfolgt, dass die gebildeten Differenzen gegen Null gehen. Sehr zweckmässig ist bei diesem Vorgehen, wenn dabei die Methoden der Fuzzy Logik angewendet werden. Durch Erfassen der Grössen der jeweiligen Differenzwerte ist es so auf einfache Weise möglich, die Eingriffe in die individuellen Heizsysteme der einzelnen Heisskanäle gezielt unterschiedlich zu dosieren.

Für die Ermittlung der benötigten Umschaltpunkte hat sich die Verwendung einer automatischen Umschaltpunkterkennung bewährt, wie sie beispielsweise in der EP-A-0707.936, der CH-Patentanmeldung 1997 0939/97 vom 23.04.1997 oder in der US-A-3 642 404 beschrieben ist.

Weiterhin kann es nützlich sein, die materialabhängig einstellbare mittlere Soll-Temperatur der Schmelze nicht nur in bekannter Weise im Verteiler zu messen und zu regeln, sondern auch als Mittelwert der in den individuellen Heisskanälen gemessen Temperaturen zu erfassen und zur Einhaltung des vom Schmelzmaterial her vorgegebenen Temperaturbereichs heranzuziehen. Dadurch wird bewirkt, dass auch bei Eingriffen an individuellen Heisskanälen als Folge des erfindungsgemässen Verfahrens der vom Material vorgegebene Bereich der mittleren Schmelzentemperatur nicht "verlassen" wird. Besteht dafür eine Tendenz, so können aufgrund der Mittelwertbildung die Temperaturen in den einzelnen Heisskanälen gesamthaft in gleichem Masse erhöht oder erniedrigt werden.

Im folgenden wird das erfindungsgemässe Verfahren an einem Ausführungsbeispiel im Zusammenhang mit der Zeichnung näher erläutert.
Fig. 1 zeigt schematisch eine Anlage zur Durchführung des neuen Verfahrens;
Fig. 2 a-c und Fig. 3 a-c geben die Verläufe der Werkzeuginnendrücke in den verschiedenen Kavitäten in Abhängigkeit von der Zeit wieder, wobei die Fig. 2 den ganzen Druckverlauf während eines Spritzgiessprozesses und die Fig. 3 den für das neue Verfahren relevanten Ausschnitt im Bereich der Umschaltpunkte und der Maximaldrücke mit einer gegenüber Fig. 2 etwa vierfach gedehnten Zeitachse darstellen.
Fig. 4 zeigt schematisch ein Beispiel wie die Werkzeuginnendrücke in der Auswerteeinheit mit Hilfe der Fuzzy Logik zu den geforderten Solltemperaturen in den Heisskanälen verarbeitet werden können.

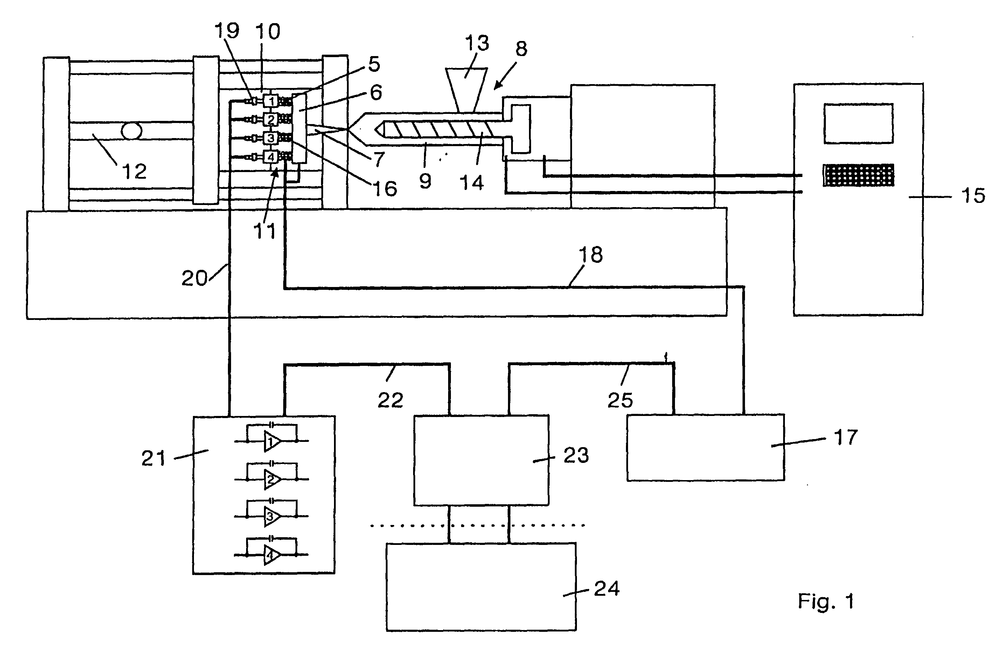

Die Spritzgiessvorrichtung von Fig. 1 weist ein Werkzeug 10 aus Metall auf, das einen hohlen Innenraum 11 umschliesst; das zweiteilige Werkzeug 10 wird von einer, z.B. hydraulischen Schliesseinheit 12 geöffnet und geschlossen. Der Innenraum 11, in dem die Spritzgussteile geformt werden, wird gebildet von vier in Form und Grösse gleichen Kavitäten 1 bis 4, die je über einen Heisskanal 5 an einen Verteiler 6 angeschlossen sind. Über den Anguss 7 steht der Verteiler 6 mit der Austrittsdüse einer Einspritzeinrichtung 8 in Verbindung.

Zur Vorbereitung und zum Einspritzen der Spritzgussmasse enthält die Einrichtung 8 einen Spritzzylinder 9, an dessen Oberseite ein Trichter 13 zur Einführung des granulierten Spritzgussmaterials mündet, und in welchem eine Schnecke 14 axial verschiebbar und drehbar angeordnet ist. Die Bewegung der Schnecke 14 wird, wie üblich von einer Steuereinrichtung 15 gesteuert.

Der Verteiler 6 ist in konventioneller Weise durch eine nicht dargestellte Heizvorrichtung beheizbar, die von einem handelsüblichen Heisskanalregelgerät 17 betätigt wird. Ein nicht gezeigter Temperaturfühler im Verteiler 6 steuert dabei die Verteilerheizung so, dass ein durch das Schmelzenmaterial vorgegebener, einstellbarer Temperaturbereich eingehalten wird.

Jeder Heisskanal 5 hat eine separate Heizvorrichtung, die symbolisch als Heizspirale 16 angedeutet ist. Diese separaten Heizungen 16 werden ebenfalls vom Heisskanaregelgerät 17 "bedient". Weiterhin ist jeder Heisskanal 5 mit einem eigenen Temperaturfühler ausgestattet, der nicht ausdrücklich dargestellt ist. Aus den gemessenen Absoluttemperaturen in den einzelnen Heisskanälen 5 wird ein Mittelwert gebildet und mit dem eingestellten, materialabhängigen Temperaturbereich verglichen. Hat der Mittelwert der Temperaturen in den Heisskanälen 5 die Tendenz aus dem eingestellten Temperaturenbereich "auszuwandern", so wird dieser Wert durch eine gleichmässige Drosselung oder Erhöhung der Heizleistung aller Heizspiralen 16 über das Gerät 17 derart geregelt, dass er im Bereich der eingestellten mittleren Temperatur verbleibt. Durch eine schematisch dargestellte Verbindung 18 zwischen dem Heisskanalregelgerät 17 und der Werkzeugkavität 11 ist der Austausch der für die Regelung der Heizungen notwendigen Signale angedeutet.

Zur Durchführung des erfindungsgemässen Verfahrens ist jede Kavität 1-4 mit einem Drucksensor 19 ausgerüstet. Als Sensoren können die meisten bekannten Arten von Drucksensoren dienen, wobei sich piezoelektrische Sensoren als besonders geeignet erwiesen haben. Über eine Verbindung 20 gelangen die Messwerte der Drucksensoren 19 zu einem für jede Kavität 1-4 eigenen Ladungsverstärker 21, von dem aus sie als elektrische Spannungen über eine Verbindung 22 einem Rechner 23 als Signalverarbeitungs- und -auswerteeinheit zugeführt werden. Zusätzlich ist der Rechner 23 mit einer automatischen Umschaltpunkterkennung 24 verbunden. Der Rechner 23 gibt nach Auswertung und Verarbeitung seiner Eingangssignale Steuerbefehle über eine schematisch gezeigte Verbindung 25, über die ihm auch die Isttemperaturen der einzelnen Kavitäten 1-4 als zusätzliche Eingangssignale vom Regelgerät 17 zugeleitet werden, zur individuellen Regelung der Temperaturen in den Heisskanälen 5 an das Heisskanalregelgerät 17. Dieses drosselt oder erhöht die Heizleistungen der einzelnen Heizspiralen 16 entsprechend.

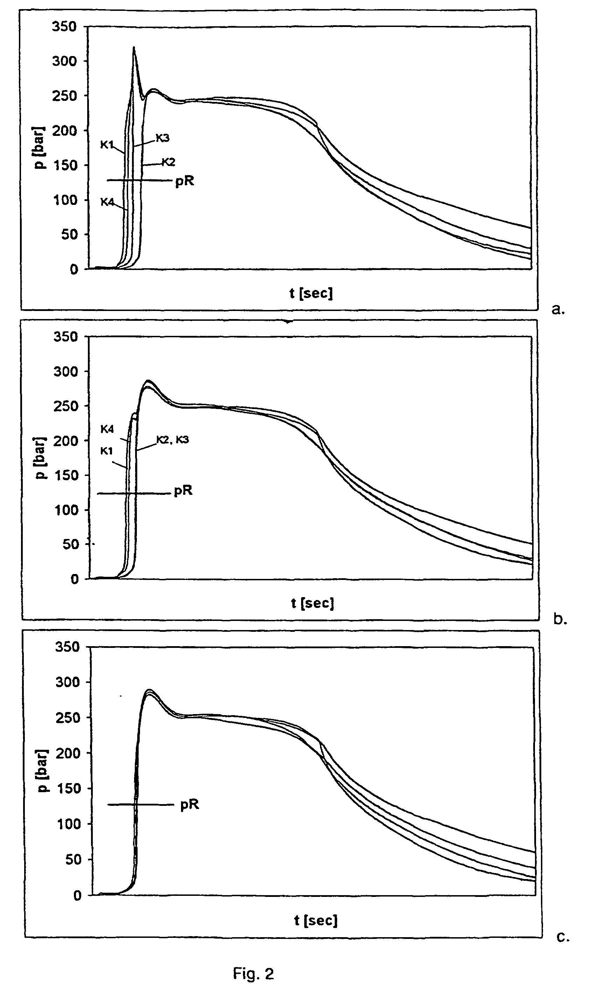

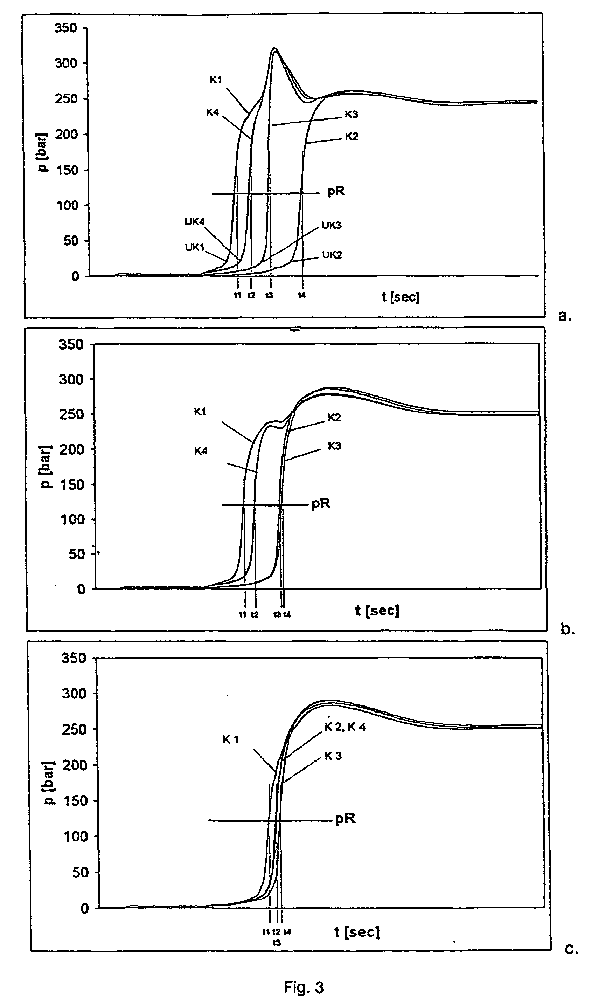

Bei dem den Fig. 2 und 3 zugrundeliegenden Ausführungsbeispiel werden Spritzgussteile aus Styrol-Butadien gespritzt. Für dieses Material ist die mittlere Verarbeitungstemperatur 250°C, so dass der einzuhaltende Temperaturbereich etwas zwischen 240°C und 260°C liegt.

In den Diagrammen der Fig. 2 und 3 ist jeweils der Verlauf des Werkzeuginnendrucks p in bar für jede Kavität K1 bis K4 in Abhängigkeit von der Zeit t in Sekunden aufgezeichnet. Die beiden Diagramme a geben dabei die Druckverläufe eines ungeregelten Spritzzyklus wieder, der nach Erreichen der mittleren Verarbeitungstemperatur "gefahren" worden ist.

Die Diagramme b zeigen die Druckkurven eines - nur zu Versuchs- und Demonstrationszwecken aufgezeichneten - Zwischenzustands, bei dem im wesentlichen durch eine Erhöhung der Temperatur im Heisskanal 5 für die Kavität K2, deren Füllzeit an diejenigen der übrigen Kavitäten angenähert worden ist.

In den Diagrammen c ist ein Zyklus aufgezeichnet, bei dem die Wirkung des vollständig durchgeführten Verfahrens wiedergegeben ist.

Während Fig. 2 nur einen Gesamteindruck der gemessenen Druckverläufe vermitteln soll, sei das Vorgehen nochmals anhand von Fig. 3 beschrieben.

In alle Diagramme a-c ist der gleiche Referenzdruck pR eingetragen, der erfindungsgemäss einerseit über den Enddrücken der Füllphasen an den Umschaltpunkten U1-U4 (Fig. 3a) liegt, die beispielsweise durch die automatische Umschaltpunkterkennung 24 ermittelt werden. Andererseits ist der Referenzdruck kleiner als der niedrigste Maximaldruck pMK2 (Fig. 3a) in einer Kavität, hier der Kavität K2.

Aus Fig. 3a des ersten aufgezeichneten Spritzzyklus ersieht man, dass die Kavität K1 als erste gefüllt wird und zur Zeit t1 den Referenzdruck pR erreicht; als nächste wird die Kavität K4 gefüllt, bei der der Referenzdruck pR zur Zeit t2 erreicht ist. Der Druckverlauf in der Kavität K3 überschreitet den Referenzdruck pR im Zeitpunkt t3, während bei der stark verzögerten Füllung von K2 der Druck pR erst zur Zeit t4 erreicht ist.

Vor der Aufzeichnung des Diagramms 3b ist das erfindungsgemässe Verfahren im Rechner 23 mit Hilfe der Differenzbildung zwischen der Zeit t4 und dem fiktiven Zeitmittelwert tM nur unvollständig so weit angewandt worden, dass die Heizleistung für die Kavität K2 um einen bestimmten Betrag erhöht worden ist. Bei dem danach durchgeführten und in Fig. 3b gezeigten Zyklus erreichen die Drücke in den Kavitäten K1 und K4 zu nahezu unveränderten Zeiten t1 und t2 den Referenzdruck pR. Die verstärkte Heizung für die Kavität K2 hat jedoch bewirkt, dass in dieser Kavität der Druck pR zur Zeit t3 kurz vor dem Zeitpunkt t4 überschritten wird, der nunmehr zur Kavität K3 gehört.

Durch eine - wiederum von der Differenz zwischen Istwert t1 und fiktivem Zeitmittel tM ausgelöste - Drosselung der Heizung für die Kavität K1 wird das Vorlaufen der Füllung von dieser Kavität reduziert, wie Fig. 3c verdeutlicht. Als Endwirkung des neuen Verfahrens sind somit die Füllzeiten für die einzelnen Kavitäten sehr stark einander angeglichen, wobei die Druckkurven für die Kavitäten K2 und K4 praktisch zusammenfallen.

Da bei Eingriffen in die individuellen Heizleistungen der einzelnen Kavitäten Beeinflussungen der Temperaturen in benachbarten Heisskanälen 5 oder Kavitäten K1 bis K4 nicht völlig verhindert werden können, verschieben sich die "Füllzeiten" t bis zum Erreichen des Referenzdrucks pR auch für Kavitäten geringfügig, deren Heizungen gegenüber vorhergehenden Zyklen unverändert geblieben sind.

Im Rechner 23 können neben den Druckkurven auch deren Zeitintegrale oder die Maximaldruckwerte, beispielsweise mit Hilfe gleichartiger Differenzbildungen gegenüber fiktiven Mittelwerten zusätzlich zur Auswertung herangezogen werden, um Störungen, wie zum Beispiel starke Druckschwankungen, die bei der beschriebenen Serie von Versuchszyklen nicht aufgetreten sind, zu erkennen und den Rechner 23 vor falschen Schlüssen zu bewahren. Für die Anwendung des auf diese Weise erweiterten Verfahrens haben sich die Methoden der unscharfen Logik (Fuzzy Logik) als nützlich erwiesen.

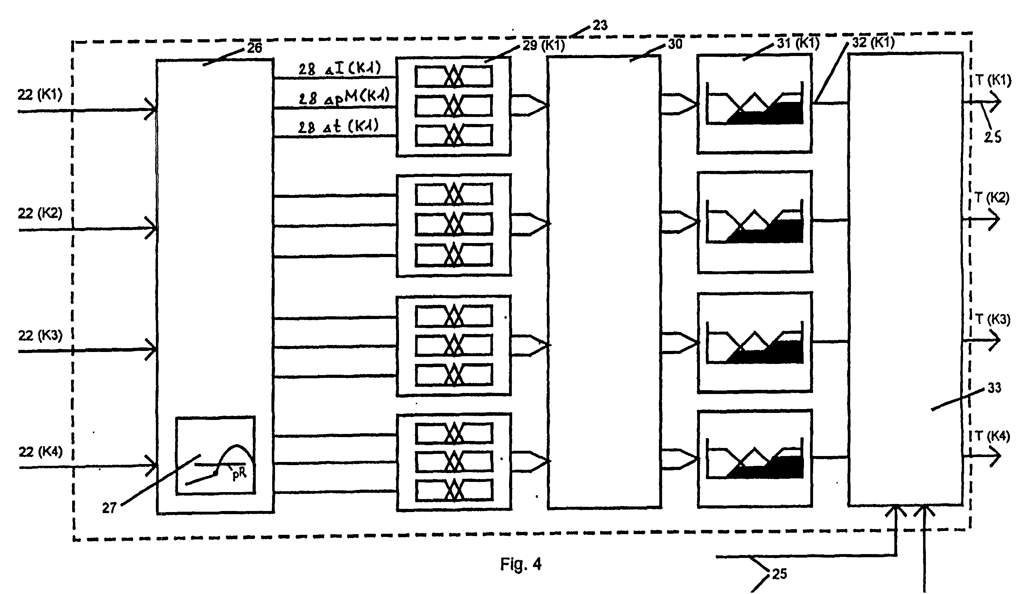

In dem in Fig. 4 gezeigten Beispiel einer Verarbeitung der Eingangssignale der Auswerteeinheit 23, mit Hilfe der Fuzzy Logik, gelangen die zu elektrischen Spannungen umgeformten Messwerte für die Werkzeuginnendrücke in jeder Kavität 1 bis 4 über die Verbindung 22, für jede Kavität 1 bis 4 separat, in eine erste Verarbeitungsstufe 26 der Auswerteeinheit oder des Rechners 23.

Die Verarbeitung dieser Eingangssignale im Rechner 23 sei nun für eine erste Kavität K1 ausführlich beschrieben; sie erfolgt für die weiteren Kavitäten K2 bis K4 in gleicher Weise.

In der Stufe 26 wird zum einen, ausgelöst von der automatischen Umschaltpunkterkennung 24 in Verbindung mit dem niedrigsten gemessenen Spitzen- oder Maximaldruck pM, automatisch ein Referenzdruck pR festgelegt, was bei 27 angedeutet ist. Der Referenzdruck pR wird mit Vorteil so gewählt, dass er in der unteren Hälfte, besser noch im unteren Drittel der Druckdifferenz zwischen dem Druck am Umschaltpunkt und dem niedrigsten Spitzendruck pM, pMK2 im Ausführungsbespiel Fig. 3a, liegt.

Weiterhin werden in der Stufe 26 zunächst für jede Kavität K1 bis K4 die Zeiten t1 bis t4 erfasst, in denen in jeder Kavität K1 bis K4 der Referenzdruck pR erreicht wird. Aus den gemessenen Zeiten werden dann ein fiktiver Zeitmittelwert und für jede Kavität K1 bis K4 die Differenz Δt der für sie ermittelten Zeit zu dem fiktiven Mittelwert gebildet. Für die Kavität K1 wird diese Differenz über eine Verbindung 28 ΔtK1 einem dieser Kavität zugeordneten Verarbeitungselement 29K1, zugeführt.

In gleicher Weise wird in der ersten Stufe 26 weiterhin das Druck/Zeitintegral I für die Kavität K1 über einen für alle Kavitäten K1 bis K4 gleichen Zeitbereich gebildet, der spätestens im Umschaltpunkt der zuerst gefüllten Kavität K1 (Fig. 3a) beginnt und zwischen dem Umschaltpunkt der zuletzt gefüllten Kavität K2 (Fig. 3a) und dem Zeitpunkt des Erreichens von deren Maximaldruck pMK2 endet. Auch aus diesem Integralen I für alle Kavitäten K1 bis K4 werden ein fiktiver Mittelwert und die Differenzen ΔI zwischen den individuellen Werten und dem Mittelwert gebildet, die über eine zweite Verbindung 28ΔIK1 ebenfalls dem Verarbeitungselement 29K1 zugeleitet wird.

Schliesslich verfährt man mit dem für die betrachtete Kavität K1 ermittelten Maximal- oder Spitzendruck pM in gleicher Weise und führt dem Element 29K1 wiederum die Differenz ApMK1 über die entsprechende Verbindung 28 zu.

In den Elementen 29, 30 und 31 erfolgen die Fuzzyfizierung, die Fuzzy-Inferenz und die Defuzzyfizierung der eingespeisten Differenzwerte nach den bekannten Methoden und Regeln der Fuzzy Logik.

Als Ausgangssignale der Fuzzy Logik wird über eine Verbindung 32 in die letzte Verarbeitungsstufe 33 des Rechners 23 - falls eine "Fehlanpassung" der Temperatur in der Kavität K1 bzw. der Heisskanaltemperatur für diese Kavität vorliegt - eine Temperaturdifferenz eingegeben, die nach Betrag und Vorzeichen die Fehlanpassung wiedergibt.

Als weitere Eingangssignale werden der Stufe 33 die materialabhängig einstellbare, mittlere Soll-Temperatur für die Schmelze sowie die Istwerte der Temperaturen in den einzelnen Kavitäten K1 bis K4 bzw. in deren Heisskanälen 5 über die in Fig. 1 schematisch wiedergegebene Signalverbindung 25 zugeführt.

Aus den vorstehend beschriebenen Eingangssignalen werden in der Stufe 33 unter Berücksichtigung der materialabhängigen mittleren Solltemperatur der Schmelze neue Sollwerte für die Temperaturen T(K1) bis T(K4) in jeder Kavität K1 bis K4 bzw. in dem zugehörigen Heisskanal 5 errechnet und, ebenfalls über die Verbindung 25, dem Heisskanalregelgerät 17 übermittelt; von diesem werden dann die zum Einhalten oder Erreichen der neuen Temperaturen in den Kavitäten notwendigen Drosselungen oder Verstärkungen der individuellen Heisskanalheizungen ausgelöst. Dabei wird das Niveau des Mittelwerts der neuen Temperaturen aller Kavitäten an die einstellbare mittlere Solltemperatur der Schmelze angeglichen. Um jedoch dauernde Schwankungen bei den Heisskanaltemperaturen zu vermeiden, werden die neuen Sollwerte für die Temperaturen in den verschiedenen Kavitäten zunächst mit den gemessenen Istwerten und mit den alten Sollwerten verglichen und erst nach diesem Vergleich in der Stufe 33 des Rechners entschieden, ob ein Befehl für die Einstellung des neuen Sollwerts für eine Kavität an das Heisskanalregelgerät 17 weitergegeben wird.

Selbstverständlich ist die Erfindung nicht auf das gezeigte Ausführungsbeispiel mit nur vier Kavitäten und/oder auf die beschriebene Auswertung und Verarbeitung der gemessenen Werkzeuginnendrücke beschränkt. Sie ist vielmehr und vor allem auch bei Spritzgiessformen mit einer Vielzahl von Kavitäten anwendbar, wobei auch andere Auswertverfahren zur Ermittlung der Sollwerte für die Temperaturen in den einzelnen Kavitäten herangezogen werden können.

### Refernzliste

- 1-4: Kavitäten
- K1-K4: Kavitäten
- 5: Heisskanal
- 6: Verteiler
- 7: Anguss
- 8: Spritzgiesseinrichtung
- 9: Spritzzylinder
- 10: Werkzeug
- 11: Werkzeugkavität
- 12: hydraulische Schliessvorrichtung
- 13: Trichter
- 14: Schnecke
- 15: Steuereinrichtung
- 16: Heizspirale
- 17: Heisskanlaregelgerät
- 18: Signalverbindung
- 19: Drucksensor
- 20: Signalverbindung
- 21: Ladungsverstärker
- 22: Signalverbindung
- 23: Auswerteeinheit (Rechner)
- 24: Umschaltpunkterkennung
- 25: Signalverbindung
- 26: erste Verarbeitungsstufe im Rechner 23
- 27: automatische Referenzdruckeinstellung
- 28: Signalverbindung
- 29: Fuzzyfizierung
- 30: Fuzzy-Inferenz
- 31: Defuzzyfizierung
- 32: Signalverbindung
- 33: letzte Verarbeitungsstufe im Rechner 23

## Patentansprüche

1. Verfahren zur Überwachung und Regelung der Formfüllung von Kunststoff-Spritzgiessformen mit einer Mehrzahl von Kavitäten (1-4), die über ein in seiner Temperatur regelbares Heisskanalsystem (5) mit geschmolzenem Material beschickt werden, wobei in jeder Kavität (1-4) mindestens während des Füllvorganges der Druckverlauf gemessen und durch Verändern der individuellen Heisskanaltemperatur für jede Kavität beeinflusst wird, **dadurch gekennzeichnet, dass** die Zeiten (t1-t4) gemessen werden, in denen vom Beginn der Füllphase aus ein bestimmter, einstellbarer Referenzdruck (pR) des Werkzeuginnendruckes in jeder Kavität (1-4) erreicht wird, wobei der Referenzdruck (pR) über dem Druck am Ende des volumetrischen Füllvorgangs, jedoch unterhalb des niedrigsten Maximaldrucks (pMK2) in einer Kavität (1-4) liegt, und dass ferner die Temperaturen in den Heisskanälen (5) individuell so geregelt werden, dass die gemessenen Zeitwerte einander angenähert werden und ihre Differenzen gegen Null gehen.

2. Verfahren nach Anspruch 1, **dadurch gekennzeichnet, dass** in einem vorgegebenen, für alle Kavitäten (1-4) gleichen Zeitbereich, der spätestens im Umschaltpunkt der zuerst gefüllten Kavität (1) beginnt und zwischen dem Umschaltpunkt der zuletzt gefüllten Kavität (2) und dem Zeitpunkt des Erreichens von deren Maximaldruck (pMK2) endet, das Druck/Zeitintegral für jede Kavität (1-4) gebildet und zusätzlich bei der Regelung der Heisskanaltemperaturen berücksichtigt wird.

3. Verfahren nach Anspruch 1 oder 2, **dadurch gekennzeichnet, dass** die maximalen Werkzeuginndrücke in jeder Kavität (1-4) erfasst und zusätzlich bei der Regelung der Heisskanaltemperaturen berücksichtigt werden.

4. Verfahren nach einem der Ansprüche 1 bis 3, **dadurch gekennzeichnet, dass** aus den erhaltenen Zeit-, Integral- und/oder Maximaldruckwerten jeweils ein fiktiver Mittelwert gebildet wird, dass ferner die Differenz der erhaltenen Werte zu den fiktiven Mittelwerten gebildet wird, und dass schliesslich die Heisskanaltemperaturen so geregelt werden, dass diese Differenzen gegen Null gehen.

5. Verfahren nach Anspruch 4, **dadurch gekennzeichnet, dass** die Regelung der Heisskanaltemperaturen mit Hilfe der Methoden der Fuzzy Logik erfolgt.

6. Verfahren nach Anspruch 1, **dadurch gekennzeichnet, dass** schrittweise jeweils die Heisskanaltemperatur der zuerst gefüllten Kavität (1) erniedrigt und/oder diejenige der zuletzt gefüllten Kavität (2) erhöht wird.

7. Verfahren nach einem der vorhergehenden Ansprüche, **dadurch gekennzeichnet, dass** die Umschaltpunkte für die einzelnen Kavitäten (1-4) mittels einer automatischen Umschaltpunkterkennung (24) ermittelt werden.

8. Verfahren nach einem der vorhergehenden Ansprüche, **dadurch gekennzeichnet, dass** die materialabhängig einstellbare, mittlere Soll-Temperatur der Schmelze nicht nur in bekannter Weise im Verteiler (6) gemessen und geregelt wird, sondern auch als Mittelwert der in den individuellen Heisskanälen (5) gemessenen Temperaturen ermittelt und zur Einhaltung des vom Material her vorgegebenen Temperaturbereiches herangezogen wird.

## Claims

1. A method for monitoring and controlling the filling of the moulds for plastic injection moulding having a multiplicity of cavities (1-4) which are charged with molten material via a temperature-controlled hot runner system (5), wherein at least during the filling operation in each of the cavities (1-4) the pressure course is measured and influenced by modifying the individual hot runner temperature for each of the cavities, **characterized in that** the time periods (t1-t4) are measured, in which from the onset of the filling phase a particular adjustable reference pressure (pR) of the mould internal pressure in each of the cavities (1-4) is achieved, wherein the reference pressure (pR) is higher than the pressure at the end of the volumetric filling operation, but lower than the lowest maximum pressure (pMK2) in a cavity (1-4), and that further the temperatures in the hot runners (5) are individually adjusted in such a manner, that the measured time values are approached to each other and the differences thereof approach zero.

2. The method according to claim 1, **characterized in that** in a predetermined time period being the same for all of the cavities (1-4), and which at the latest begins at the switchover point of the cavity (1) filled first and ends between the switchover point of cavity (2) filled last and the time point of reaching the maximum pressure (pMK2) thereof, the pressure/time integral for each of the cavities (1-4) is formed and in addition considered in controlling the hot runner temperatures.

3. The method according to claim 1 or 2, **characterized in that** the maximum mould internal pressures in each of the cavities (1-4) are recorded and in addition considered in controlling the hot runner temperatures.

4. The method according to any of the claims 1 to 3, **characterized in that** from each of the obtained time, integral and/or maximum pressure values a virtual mean value is formed, further the difference between the obtained values and the virtual mean values is formed, and that finally the hot runner temperatures are controlled in such a manner, that these differences approach zero.

5. The method according to claim 4, **characterized in that** the regulation of the hot runner temperatures is performed by means of the methods of the Fuzzy Logics.

6. The method according to claim 1, **characterized in that** the hot runner temperature of cavity (1) filled first is decreased and/or that of cavity (2) filled last is increased, both in a stepwise manner.

7. The method according to any of the preceding claims, **characterized in that** the switchover points for the individual cavities (1-4) are determined by means of an automatic switchover point identification (24).

8. The method according to any of the preceding claims, **characterized in that** the mean set temperature of the molten material, which may be adjusted depending on the material, is not only measured and controlled in manifold (6) in a known manner, but also determined as a mean value of the temperatures measured in the individual hot runners (5) and consulted for keeping the temperature range predetermined by the material.

## Revendications

1. Procédé pour le contrôle et le réglage de la charge du moule de moulage par injection de matière synthétique comprenant une pluralité de cavités (1-4), qui sont alimentées avec du matériau fondu au moyen d'un système de canal chaud (5) réglable dans sa température, la courbe de pression étant mesurée dans chaque cavité (1-4) au moins pendant l'opération de remplissage et étant influencée par la variation de la température individuelle du canal chaud pour chaque cavité, **caractérisé en ce que** les temps (t1-t4) dans lesquels une pression de référence (pR) définie et réglable de la pression intérieure d'outil est obtenue dans chaque cavité (1-4) avant le début de la phase de remplissage, sont mesurés,la pression de référence (pR) se situant au-dessus de la pression à la fin de l'opération de remplissage volumétrique, mais au-dessous de la pression maximale (pMK2) la plus faible dans une cavité (1-4), et **en ce que** également les températures dans les canaux chauds (5) sont réglées individuellement de telle sorte que les valeurs de temps mesurées sont rapprochées les unes des autres et leurs différences tendent vers zéro.

2. Procédé selon la revendication 1, **caractérisé en ce que**, dans une plage de temps prédéfinie et identique pour les toutes les cavités (1-4), qui débute au plus tard au point d'inversion de la cavité (1) remplie en premier et se termine entre le point d'inversion de la dernière cavité (2) remplie et le moment où sa pression maximale (pMK2) est atteinte, l'intégrale de temps/pression est formée pour chaque cavité (1-4) et prise en compte en supplément pour le réglage des températures du canal chaud.

3. Procédé selon la revendication 1 ou 2, **caractérisé en ce que** les pressions intérieures d'outil maximales sont enregistrées dans chaque cavité (1-4) et sont prises en compte en supplément lors du réglage des températures du canal chaud.

4. Procédé selon l'une quelconque des revendications 1 à 3, **caractérisé en ce que**, à partir des valeurs de temps, d'intégrale et/ou de pression maximale obtenue, on forme à chaque fois une valeur moyenne fictive, **en ce que** la différence entre les valeurs obtenues et les valeurs moyennes fictives est calculée, et **en ce qu'**enfin les températures du canal chaud sont réglées de telle sorte que ces différences tendent vers zéro.

5. Procédé selon la revendication 4, **caractérisé en ce que** le réglage des températures du canal chaud s'effectue à l'aide des méthodes de la logique floue.

6. Procédé selon la revendication 1, **caractérisé en ce que** à chaque fois la température du canal chaud de la dernière cavité (1) remplie est abaissée progressivement et/ou celle de la dernière cavité remplie (2) est augmentée progressivement.

7. Procédé selon l'une quelconque des revendications précédentes, **caractérisé en ce que** les points d'inversion pour les cavités individuelles (1-4) sont déterminés au moyen d'une détection automatique du point d'inversion (24).

8. Procédé selon l'une quelconque des revendications précédentes, **caractérisé en ce que** la température prescrite moyenne, réglable en fonction du matériau, de la masse fondue non seulement est mesurée et réglée de façon connue dans le répartiteur (6), mais est calculée également comme valeur moyenne des températures mesurées dans les canaux chauds (5) individuels et est utilisée pour le respect de la plage de températures prédéfinie à partir du matériau.
